# EUROPEAN PATENT SPECIFICATION

(11) **EP 2 508 972 B1**
(45) Date of publication and mention of the grant of the patent: **18.10.2017**
(21) Application number: 12157441.2
(22) Date of filing: 29.02.2012
(51) Int. Cl.: G06F 3/0481, G06F 3/0488

(54) **Portable electronic device and method of controlling same**
Tragbare elektronische Vorrichtung und Kontrollverfahren dafür
Dispositif électronique portable et son procédé de commande

(30) Priority: 05.04.2011 US 201161472041 P
(43) Date of publication of application: 10.10.2012
(73) Proprietor: 2236008 Ontario Inc., Waterloo, ON N2K 0A7 (CA)
(72) Inventor: Dodge, Danny Thomas, Kanata, Ontario K2K 0B3 (CA)
(74) Representative: Hanna Moore + Curley

(56) References cited:
- EP-A1- 0 538 705
- WO-A2-2009/137419
- US-A- 6 067 085
- US-A1- 2005 168 441
- US-A1- 2006 238 515
- US-A1- 2009 085 886
- US-A1- 2009 278 806
- US-A1- 2010 099 456
- US-A1- 2010 105 443
- US-A1- 2010 164 959
- US-A1- 2010 214 218
- US-A1- 2011 074 710
- US-A1- 2011 205 163
- US-B2- 8 433 828

## Description

### FIELD OF TECHNOLOGY

The present disclosure relates to portable electronic devices including touch-sensitive displays and the control of such portable electronic devices.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

US 2011/074710 discloses a method for manipulating user interface objects at a multifunction device having a display and a touch-sensitive surface. The method includes: displaying a first user interface for an application at a first magnification level. The application has a range of magnification levels, including a predefined magnification level for requesting a second user interface with a multi-finger pinch gesture.

EP 0 538 705 discloses a graphical user interface with gesture recognition in an integrated operating environment. The integrated operating environment allows a plurality of application programs to be running simultaneously, one of which is designated the active application program to which all input data is directed.

WO 2009/137419 A2 discloses a touch-sensitive display screen enhanced by a touch-sensitive area outside the display screen. The touch-sensitive area allows a user to activate commands using a gesture vocabulary.

US 2010/105443 discloses methods and apparatuses for facilitating interaction with touch screen apparatuses. A method may include detecting a touch interaction with a touch screen display and identifying the touch interaction as comprising a trigger touch interaction, the trigger touch interaction may include sliding an input object along a path from a point of origin outside of an active region of the touch screen display to a point within the active region. The method may further include determining based at least in part upon the trigger touch interaction, a function associated with the trigger touch interaction and executing the determined function.

US 2010/214218 A1 discloses an apparatus including a controller that is configured to receive input for activating a virtual mouse and to activate a virtual mouse in response thereto by displaying a cursor adjacent a touch zone.

US 8 433 828 discloses techniques for controlling a touch input device using an accessory communicatively coupled to the device. In one aspect, an accessibility framework is launched on the device. An accessory coupled to the device is detected. Receipt of input from the accessory is enabled. An accessibility packet is received from the accessory. The accessibility packet includes an accessibility command and one or more parameters. The accessibility packet is processed to extract the first accessibility command and the one or more parameters.

### SUMMARY

For the solution of the problem there is provided a method as defined in appended claim 1 and a portable electronic device as defined in appended claim 11. Particular embodiments are described in the appended dependent claims.

### BRIEF DESCRIPTION OF THE DRAWINGS

Embodiments of the present disclosure will now be described, by way of example only, with reference to the attached figures, wherein:
FIG. 1 is a block diagram of a portable electronic device in accordance with an example embodiment;
FIG. 2 is a front view of an example of a portable electronic device illustrating examples of touches;
FIG. 3 is a flowchart illustrating a method of controlling the portable electronic device in accordance with the disclosure;
FIG. 4 is a flowchart illustrating another method of controlling the portable electronic device in accordance with the disclosure;
FIG. 5 is a front view of an example of a portable electronic device illustrating examples of touches; and
FIGS. 6 and 7 illustrate examples of pointing device events and locations being mapped to touches.

### DETAILED DESCRIPTION

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, such as a portable electronic device. Examples of portable electronic devices include wireless communication devices such as pagers, mobile or cellular phones, smartphones, wireless organizers, PDAs, notebook computers, netbook computers, tablet computers, and so forth. The portable electronic device may also be a portable electronic device without wireless communication capabilities. Examples include handheld electronic game device, digital photograph album, digital camera, notebook computers, netbook computers, tablet computers, or other device.

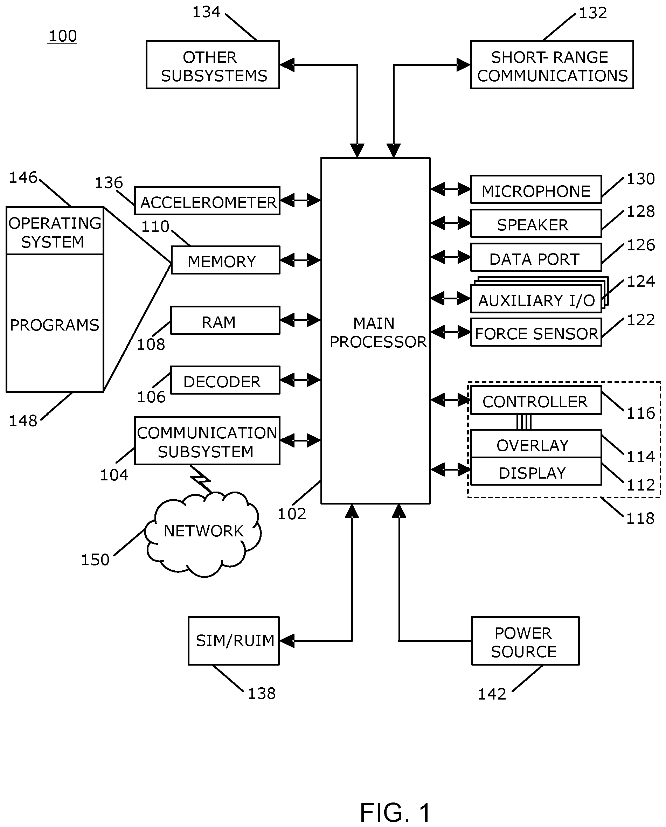

A block diagram of an example of a portable electronic device 100 is shown in FIG. 1. The portable electronic device 100 includes multiple components, such as a processor 102 that controls the overall operation of the portable electronic device 100. The portable electronic device 100 presently described optionally includes a communication subsystem 104 and a short-range communications 132 module to perform various communication functions, including data and voice communications. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, an auxiliary input/output (I/O) subsystem 124, a data port 126, a speaker 128, a microphone 130, short-range communications 132, and other device subsystems 134. The processor 102 may optionally interact with one or more actuators 120 to provide tactile feedback and one or more force sensors 122 to detect a force imparted on the touch-sensitive display 118. Interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an orientation sensor such as an accelerometer 136 to detect direction of gravitational forces or gravity-induced reaction forces so as to determine, for example, the orientation of the portable electronic device 100.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104, for example.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example embodiment, the touch-sensitive display 118 is a capacitive touch-sensitive display which includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The display 112 of the touch-sensitive display 118 includes a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact, known as the centroid. A signal is provided to the controller 116 in response to detection of a touch. A touch may be detected from any suitable object, such as a finger, thumb, appendage, or other items, for example, a stylus, pen, or other device, depending on the nature of the touch-sensitive display 118. The location of the touch moves as the detected object moves during a touch. The controller 116 and/or the processor 102 may detect a touch by any suitable contact member on the touch-sensitive display 118. Similarly, multiple simultaneous touches may be detected.

One or more gestures are also detected by the touch-sensitive display 118. A gesture is a particular type of touch on a touch-sensitive display 118 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture.

An example of a gesture is a swipe (also known as a flick). A swipe has a single direction. The touch-sensitive overlay 114 may evaluate swipes with respect to the origin point at which contact is initially made with the touch-sensitive overlay 114 and the end point at which contact with the touch-sensitive overlay 114 ends rather than using each of location or point of contact over the duration of the gesture to resolve a direction.

Examples of swipes include a horizontal swipe, a vertical swipe, and a diagonal swipe. A horizontal swipe typically comprises an origin point towards the left or right side of the touch-sensitive overlay 114 to initialize the gesture, a horizontal movement of the detected object from the origin point to an end point towards the right or left side of the touch-sensitive overlay 114 while maintaining continuous contact with the touch-sensitive overlay 114, and a breaking of contact with the touch-sensitive overlay 114. Similarly, a vertical swipe typically comprises an origin point towards the top or bottom of the touch-sensitive overlay 114 to initialize the gesture, a horizontal movement of the detected object from the origin point to an end point towards the bottom or top of the touch-sensitive overlay 114 while maintaining continuous contact with the touch-sensitive overlay 114, and a breaking of contact with the touch-sensitive overlay 114.

Swipes can be of various lengths, can be initiated in various places on the touch-sensitive overlay 114, and need not span the full dimension of the touch-sensitive overlay 114. In addition, breaking contact of a swipe can be gradual in that contact with the touch-sensitive overlay 114 is gradually reduced while the swipe is still underway.

Meta-navigation gestures may also be detected by the touch-sensitive overlay 114. A meta-navigation gesture is a touch that has an origin point that is outside the display area of the touch-sensitive overlay 114. Meta-navigation gestures may have an end point that is generally at the same location as the origin point, an end point that is in the outside the display area of the touch-sensitive overlay 114 or an end point that is on the display area of the touch-sensitive display. The origin point of the meta-navigation gesture may be in the non-display area 208. Other attributes of the meta-navigation gesture may be detected and be utilized to detect the meta-navigation gesture. The use of meta-navigation gestures and the identification of such gestures provide additional input that may be distinguished from non-meta navigation gestures or other touches. These meta-navigation gestures may facilitate entry of input related to an application for which information is not displayed at the time the gesture is received and may further provide system level navigation without the use of additional screens or menus for such navigation, providing an improved interface.

Meta-navigation gestures may also include multi-touch gestures in which gestures are simultaneous or overlap in time and at least one of the touches has an origin point that is outside the display area and moves to a position on the display area of the touch-sensitive overlay 114. Thus, two fingers may be utilized for meta-navigation gestures. Further, multi-touch meta-navigation gestures may be distinguished from single touch meta-navigation gestures and may provide additional or further functionality.

In some example embodiments, an optional force sensor 122 or force sensors is disposed in any suitable location, for example, between the touch-sensitive display 118 and a back of the portable electronic device 100 to detect a force imparted by a touch on the touch-sensitive display 118. The force sensor 122 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "chancel," "deplete," or "unblock"; function buttons, such as play or stop on a music player; and so forth. Different magnitudes of force may be associated with different functions or input. For example, a lesser force may result in panning, and a higher force may result in zooming.

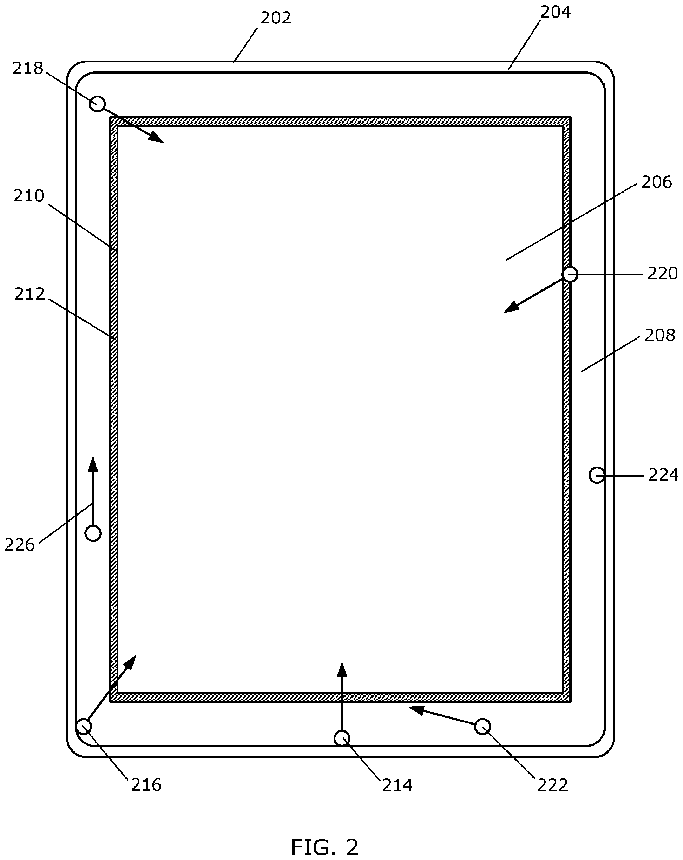

A front view of an example of the portable electronic device 100 is shown in FIG. 2. The portable electronic device 100 includes a housing 202 that encloses components such as shown in FIG. 1. The housing 202 may include a back, sidewalls, and a front 204 that frames the touch-sensitive display 118.

In the example of FIG. 2, the touch-sensitive display 118 is generally centered in the housing 202 such that a display area 206 of the touch-sensitive overlay 114 is generally centered with respect to the front 204 of the housing 202. The non-display area 208 of the touch-sensitive overlay 114 extends around the display area 206. In the presently described embodiment, the width of the non-display area is 4 mm.

For the purpose of the present example, the touch-sensitive overlay 114 extends to cover the display area 206 and the non-display area 208. Touches on the display area 206 may be detected and, for example, may be associated with displayed selectable features. Touches on the non-display area 208 may be detected, for example, to detect a meta-navigation gesture. Alternatively, meta-navigation gestures may be determined by both the non-display area 208 and the display area 206. The density of touch sensors may differ from the display area 206 to the non-display area 208. For example, the density of nodes in a mutual capacitive touch-sensitive display, or density of locations at which electrodes of one layer cross over electrodes of another layer, may differ between the display area 206 and the non-display area 208.

Gestures received on the touch-sensitive display 118 may be analyzed based on the attributes to discriminate between meta-navigation gestures and other touches, or non-meta navigation gestures. Meta-navigation gestures may be identified when the gesture crosses over a boundary near a periphery of the display 112, such as a boundary 210 between the display area 206 and the non-display area 208. In the example of FIG. 2, the origin point of a meta-navigation gesture may be determined utilizing the area of the touch-sensitive overlay 114 that covers the non-display area 208.

A buffer region 212 or band that extends around the boundary 210 between the display area 206 and the non-display area 208 may be utilized such that a meta-navigation gesture is identified when a touch has an origin point outside the boundary 210 and the buffer region 212 and crosses through the buffer region 212 and over the boundary 210 to a point inside the boundary 210. Although illustrated in FIG. 2, the buffer region 212 may not be visible. Instead, the buffer region 212 may be a region around the boundary 210 that extends a width that is equivalent to a predetermined number of pixels, for example. Alternatively, the boundary 210 may extend a predetermined number of touch sensors or may extend a predetermined distance from the display area 206. The boundary 210 may be a touch-sensitive region or may be a region in which touches are not detected.

Gestures that have an origin point in the buffer region 212, for example, may be identified as non-meta navigation gestures. Optionally, data from such gestures may be utilized by an application as a non-meta navigation gesture. Alternatively, data from such gestures may be discarded such that touches that have an origin point on the buffer region 212 are not utilized as input at the portable electronic device 100.

FIG. 2 further illustrates examples of touches on the touch-sensitive display 118. The buffer region 212 is illustrated in FIG. 2 by hash markings for the purpose of explanation. As indicated, the buffer region 212 may not be visible to the user. For the purpose of explanation, touches are illustrated by circles at their points of origin. Arrows extending from the circles illustrate the paths of the touches that are gestures.

The touch 214 begins at the origin point outside the boundary 210 and outside the buffer region 212. The path of the touch 302 crosses the buffer region 212 and the boundary 210 and is therefore identified as a meta-navigation gesture. Similarly, the touches 216 and 218 both have origin points outside the boundary 210 and the buffer region 212 and their paths cross the buffer region 212 and the boundary 210. Touches 216 and 218 are therefore identified as meta-navigation gestures. The touch 220, however, has an origin point that falls within the buffer region 212 and the touch 220 is therefore not identified as a meta-navigation gesture. The touch 222 begins at an origin point outside the boundary 210 and the buffer region 212, however, does not cross the boundary 210. The touch 224 also has an origin point outside the boundary 210 and the buffer region 212 and an end point that is in generally the same location as the origin point.

In an example, the meta-navigation gesture 214, which originates near a bottom, center of the touch-sensitive display 118 and follows a generally vertical path in the orientation in which the information from a current application is displayed, causes a homescreen associated with a root-navigation application to replace the information associated with the current application. The homescreen includes a carousel showing the currently active applications indicated in a top portion of the display. Accordingly, currently active apps are shown in a browsable carousel in the top portion of the Home Screen and application icons for non-active applications are provided at the bottom portion of the home screen for ease of selection.

In another example, the meta-navigation gesture 216, which originates near a bottom, left corner of the touch-sensitive display 118, causes information associated with a status application to be tiled over the information associated with the current application. Further, the meta-navigation gesture 218, which originates near a top, left corner of the touch-sensitive display 118, causes information associated with a notification application to be tiled over the information associated with the current application, for example.

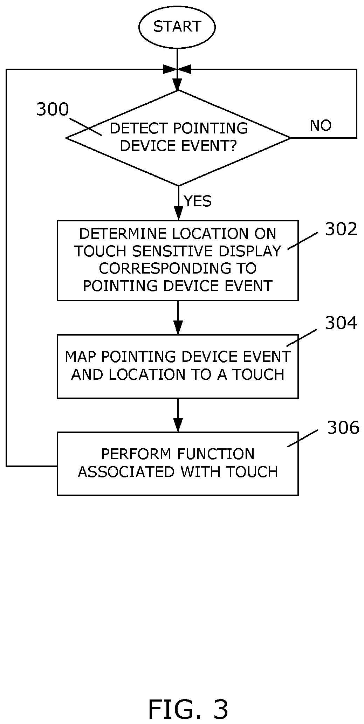

FIG. 3 is a flowchart illustrating an example of a method of receiving input at a portable electronic device having a touch-sensitive display. The method may be carried out by software executed by, for example, the processor 102. Coding of software for carrying out such a method is within the scope of a person of ordinary skill in the art given the present description. The method may contain additional or fewer processes than shown and described, and may be performed in a different order. Computer-readable code executable by, for example, the processor 102 of the portable electronic device 100 to perform the method, may be stored in a computer-readable medium.

When executing the method of FIG. 3, a pointing device, such as a mouse, a joystick, a trackball or a pointing stick, for example, is in electrical communication with the portable electronic device 100. The pointing device may be wirelessly connected to the portable electronic device 100 or may communicate via a wired connection. The pointing devices may include actuators to facilitate left click and right click input respectively. The actuators may be left and right buttons, for example. In general, a left button click selects displayed elements on the touch-sensitive display 118 that are selectable and correspond to a tracker location on the touch-sensitive display 118. Selecting displayed elements may cause functions associated with the displayed elements to be performed. A right button click causes functions to be performed and may be used to achieve meta-navigation gestures when the portable electronic device 100 receives input from the pointing device rather than the touch-sensitive display 118.

Referring still to FIG. 3, when a pointing device event is detected 300, a location on the touch-sensitive display 118 corresponding to the pointing device event is determined 302. The pointing device event and the location are then mapped 304 to a touch and a function associated with the touch is performed 306.

A pointing device event may be a click down event, a click up event or a click down event and a click up event. In one embodiment, only click up event locations are mapped to touches. In another embodiment, only click down event locations are mapped to touches. The pointing device event may be detected in response to user actuation of a secondary pointing device actuator when a primary pointing device actuator is used to perform select functions. An example of a secondary pointing device actuator is a right button on a pointing device, a left button on a pointing device, a middle button on a three-button pointing device, a combination of pointing device buttons, a clickable scroll wheel or a clickable trackball.

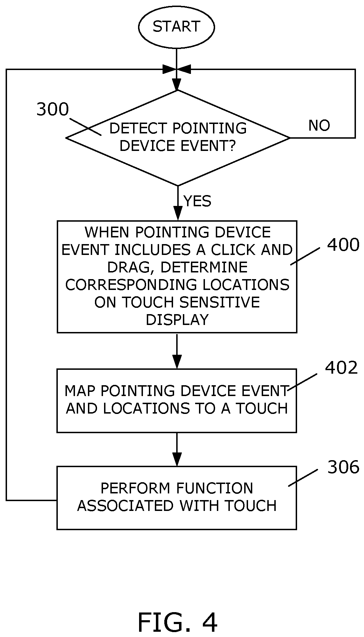

When the pointing device event is a click down event and a click up event and the click down and click up events occur at different locations, the pointing device input corresponds to a "click and drag" user operation and the method of FIG. 4 is performed. Following detection 300 of the pointing device event, corresponding locations on the touch-sensitive display 118 are determined 400. The pointing device event and locations are then mapped 402 to a touch and a function associated with the touch is performed 306.

Pointing device events in which the location of the click down and click up events are generally constant may be mapped to touches having constant location origin and end points, gestures or meta-navigation gestures. Similarly, pointing device events in which the location of the click down and click up events are different may be mapped to touches having constant location origin and end points, gestures or meta-navigation gestures. It may be desirable to map constant location pointing device events to touches having constant location origin and end points and click and drag type pointing device events to gestures in order for the operations to be more intuitive to users, which may facilitate user learning of commands.

The mapping 304 of a pointing device event when the tracker location is in a defined area may include the simulations of touch and gesture inputs, including meta-navigation gestures, that may trigger the associated function. The mapping operation is performed by the processor 102 which communicates with the memory 110. Touches are stored in association with pointing device events and locations on the touch sensitive display 118. For example, a right click when a tracker of a pointing device is displayed in a defined area at a bottom left of the touch-sensitive display 118 may be mapped to meta-navigation gesture 216, which causes information associated with a status application to be tiled over the information associated with the current application. Once the corresponding touch has been determined, existing software of the portable electronic device 100 may be relied upon to perform the associated function.

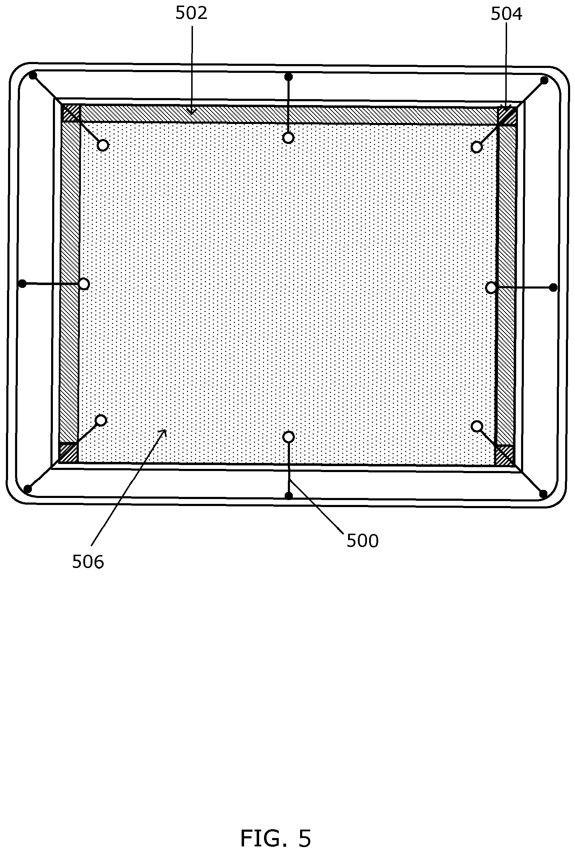

The locations that are associated with touches may include one or more defined areas on the touch-sensitive display 118. Examples of defined areas include bands 502 along the edges of the display area 206, boxes 504 at the corners of the display area 206 and the portion 506 of the display area 206 that is not included in other defined areas, as shown in FIG. 5. Simulated meta-navigation gestures 500 that a pointing device event and location may be mapped to are also shown in FIG. 5.

Examples of functions performed include displaying a menu, scrolling to a previous or next application and displaying a homescreen, for example. The functions performed in response to a pointing device event may be context sensitive or may not be context sensitive. For example, a right click when the tracker is at or near the centre of the touch-sensitive display 118 may be mapped to meta-navigation gesture 214 that causes a homescreen associated with a root-navigation application to replace the information associated with the current application. The homescreen may be displayed regardless of which is the current application and, therefore, is not context sensitive. A right click when the tracker is in a defined area at or near the top center of an application displayed on the touch-sensitive display 118, may be mapped to a touch that causes application settings to be displayed. Since the settings displayed are different depending on which application the tracker is located on, this function performed is context sensitive. Thus, defined areas may exist on the screen for tracker location and right clicking, for example. The defined areas may be displayed, for example, by displaying a border around the defined areas, by highlighting the defined area when the tracker enters the area, or the defined areas may not be visible to the user.

In one example, a default tracker icon is changed to a different tracker icon when the tracker is moved into one of the defined areas. The default tracker icon may be an arrow, for example, and different tracker icons may include a hand, a square, a circle or other shape. In addition, the different tracker icon may be an arrow that is highlighted or has a colour that is different from the default tracker icon. The default tracker icon may change to a first tracker icon when located in any of the defined areas to indicate to the user that the associated function to be triggered by a pointing device event at that location corresponds to a meta-navigation gesture or other gesture. The first tracker icon is sufficiently different from the default tracker icon and may be any one of the different tracker icon examples provided above. Alternatively, different tracker icons may be associated with some or all of the defined areas on the touch-sensitive display 118. For example, when the tracker is located at or near the centre of the touch-sensitive display 118, the tracker may be a house icon, for example, which may be mapped to a meta-navigation gesture that causes a homescreen associated with a root-navigation application to be displayed when a pointing device event is performed. By altering the appearance of the tracker when the tracker is located in one of the defined areas, the tracker may provide the user with an indication of the associated function that will be triggered by a pointing device event at that location.

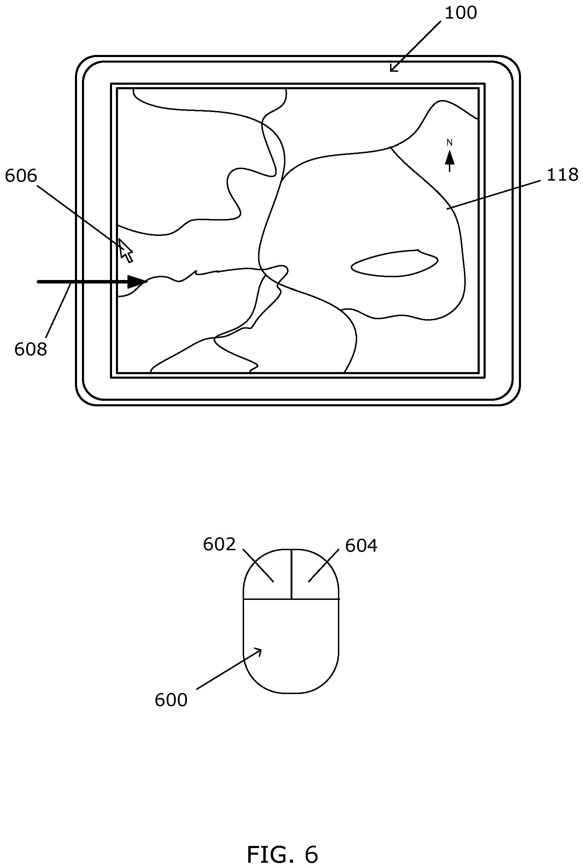

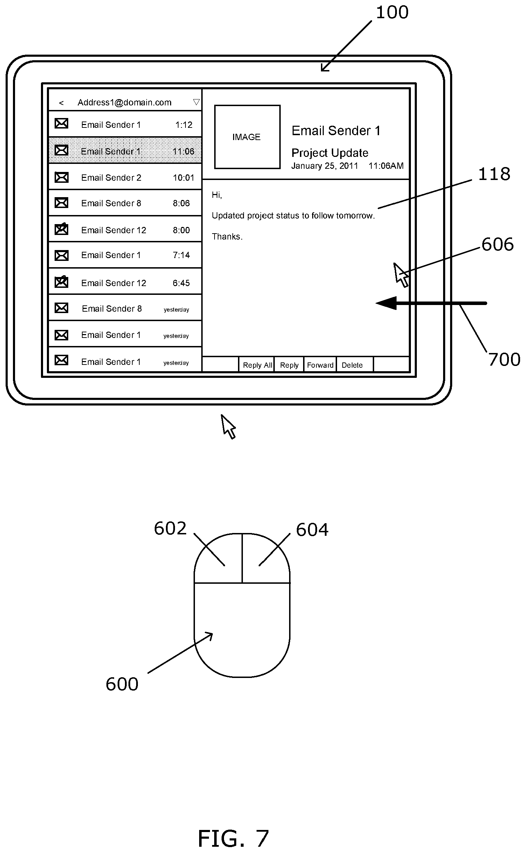

Continued reference is made to FIG. 3 with additional reference to FIGS. 6 and 7 to describe one example of a method of facilitating input at the portable electronic device 100. In the present example, the pointing device is a mouse 600 including a left button 602 and a right button 604. The mouse 600 is in wireless communication with the portable electronic device 100. When a pointing device event is detected 300, which is a right click, a location on the touch-sensitive display 118 corresponding to the pointing device event is determined 302. As shown in FIG. 6, a tracker 606 is located on the left side of the touch-sensitive display 118. The pointing device event and the tracker location are then mapped 304 to a touch. In this example, the right click and the tracker location are mapped 304 to a touch that performs a switch to previous application function. During touch operation of the portable electronic device 100, a swipe in the direction of arrow 608 achieves the switch to previous application function. The function is performed 306 to replace the current application, which is a map application, with the previous application. In this example, the previous application is a messaging application, which is shown in FIG. 7. Subsequent right clicks at the same tracker location will scroll through other previous applications. Further, as shown in FIG. 7, a right click when the tracker is located on the right side of the touch-sensitive display 118 maps to a switch to next application function, as indicated by arrow 700.

In another example, a pointing device event and a location is mapped to a volume adjustment meta-navigation gesture. The volume adjustment meta-navigation gesture simulates operation of a volume adjustment slider. Referring back to FIG. 2, a touch 226 begins at an origin point outside the boundary 120 and moves in a generally vertical direction in order to adjust the volume up or down. Referring also to FIG.4, the pointing device event, which is a "click and drag" event, is detected 300 and locations corresponding to the click down and click up events are determined 400. The pointing device gesture and locations are then mapped 402 to the volume adjustment meta-navigation gesture and the corresponding volume adjustment is performed 306.

By mapping pointing device events to touches, additional functionality may be achieved when operating a portable electronic device 100 having a touch-sensitive display 118 in a non-touch application.

The present disclosure may be embodied in other specific forms without departing from its essential characteristics. The described embodiments are to be considered in all respects only as illustrative and not restrictive. The scope of the present disclosure is, therefore, indicated by the appended claims.

## Claims

1. A method of facilitating input at a portable electronic device (100) having a touch-sensitive display (118), the method comprising:
receiving a pointing device event input at a processor (102) of the portable electronic device (100), the portable electronic device comprising a touch-sensitive non-display area (208) extending around a display area (206) of the touch-sensitive display (118), the pointing device event input being received from a pointing device in electrical communication with the portable electronic device and the pointing device being one of: a mouse, a joystick and a trackball;
determining a location of a displayed tracker controlled by the pointing device in the display area of the touch-sensitive display corresponding to the pointing device event input;
in response to determining that the location of the displayed tracker is within a defined area of the display area (206), mapping (304), at the processor by accessing a memory of the portable electronic device that is in communication with the processor, the pointing device event input and the defined area to a meta-navigation gesture input, a meta-navigation gesture being a touch that has an origin point that is outside the display area of the touch-sensitive overlay (114), the memory comprising meta-navigation gesture inputs and non-meta-navigation gesture inputs stored in association with pointing device event inputs and locations on the display area, the defined area being smaller than the display area of the touch-sensitive display;
and
performing a function associated with the meta-navigation gesture (216) input;
wherein the displayed tracker changes from a default tracker icon to a different tracker icon when the location of the displayed tracker is in the defined area.

2. A method as claimed in claim 1, wherein the pointing device event is generated by actuation of a right button (604) of a pointing device (600).

3. A method as claimed in any preceding claim, wherein the function is context sensitive.

4. A method as claimed in any preceding claim, wherein the pointing device event comprises click down or click up.

5. A method as claimed in any preceding claim, comprising determining two locations on the touch-sensitive display (118) when the pointing device event comprises click down and click up, mapping the pointing device event and locations to a gesture and performing a function associated with the gesture.

6. A method as claimed in any preceding claim, wherein the function is one of: displaying a menu, scrolling to a different application, and displaying a homescreen.

7. A method as claimed in claim 1, wherein performing the function associated with the touch comprises simulating inputs on the touch-sensitive display.

8. A method as claimed in any preceding claim, comprising mapping the pointing device event and location to a touch associated with a defined area when the location is in the defined area.

9. A method as claimed in claim 1, wherein a buffer region (212) is located between the display area (206) and the touch-sensitive non-display area (208).

10. A computer-readable medium having computer-readable code executable by at least one processor (102) of the portable electronic device (100) to perform the method of any preceding claim.

11. A portable electronic device (100) comprising:
a touch-sensitive display (118) configured to display information;
a touch-sensitive non-display area (208) extending around a display area (206) of the touch-sensitive display (118), and
a processor (102) connected to the touch-sensitive display to:
receiving a pointing device event input, the pointing device event input being received from a pointing device in electrical communication with the portable electronic device and the pointing device being one of: a mouse, a joystick and a trackball;
determining a location of a displayed tracker controlled by the pointing device in the display area of the touch-sensitive display corresponding to the pointing device event input;
in response to determining that the location of the displayed tracker is within a defined area of the display area (206), mapping (304), by accessing a memory of the portable electronic device that is in communication with the processor, the pointing device event input and the defined area to a meta-navigation gesture input, the meta-navigation gesture being a touch that has an origin point that is outside the display area of the touch-sensitive overlay (114), the memory comprising meta-navigation gesture inputs and non-meta-navigation gesture inputs stored in association with pointing device event inputs and locations on the display area, the defined area being smaller than the display area of the touch-sensitive display; and
performing a function associated with the meta-navigation gesture (216) input;
wherein the displayed tracker changes from a default tracker icon to a different tracker icon when the location of the displayed tracker is in the defined area.

## Patentansprüche

1. Verfahren zum Vereinfachen einer Eingabe an einer tragbaren elektronischen Vorrichtung (100), die eine berührungsempfindliche Anzeige (118) aufweist, wobei das Verfahren Folgendes umfasst:
Empfangen einer Zeigevorrichtungsereigniseingabe an einem Prozessor (102) der tragbaren elektronischen Vorrichtung (100), wobei die tragbare elektronische Vorrichtung einen berührungsempfindlichen Nichtanzeigebereich (208) umfasst, der sich um einen Anzeigebereich (206) der berührungsempfindlichen Anzeige (118) erstreckt, wobei die Zeigevorrichtungsereigniseingabe von einer Zeigevorrichtung empfangen wird, die mit der tragbaren elektronischen Vorrichtung in elektrischer Verbindung steht und es sich bei der Zeigevorrichtung um eines von Folgenden handelt: eine Maus, einen Joystick und einen Trackball;
Bestimmen eines Orts eines angezeigten Trackers, der durch die Zeigevorrichtung in dem Anzeigebereich der berührungsempfindlichen Anzeige gesteuert wird, welcher der Zeigevorrichtungsereigniseingabe entspricht;
als Reaktion auf das Bestimmen, dass sich der Ort des angezeigten Trackers in einem definierten Bereich des Anzeigebereichs (206) befindet, Zuordnen (304) an dem Prozessor der Zeigevorrichtungsereigniseingabe und des definierten Bereichs zu einer Meta-Navigationsgesteneingabe durch Zugriff auf einen Speicher der tragbaren elektronischen Vorrichtung, der mit dem Prozessor in Verbindung steht, wobei es sich bei einer Meta-Navigationsgesteneingabe um eine Berührung handelt, deren Ursprungspunkt außerhalb des Anzeigebereichs des berührungsempfindlichen Overlays (114) liegt, wobei der Speicher Mega-Navigationsgesteneingaben und Nicht-Meta-Navigationseingaben umfasst, die in Zusammenhang mit Zeigevorrichtungsereigniseingaben und Orten auf dem Anzeigebereich gespeichert sind, wobei der definierte Bereich kleiner ist als der Anzeigebereich der berührungsempfindlichen Anzeige;
und
Ausführen einer Funktion, die der Meta-Navigationsgesteneingabe (216) zugeordnet ist;
wobei sich der angezeigte Tracker von einem Standardtrackersymbol in ein anderes Trackersymbol ändert, wenn sich der Ort des angezeigten Trackers in dem definierten Bereich befindet.

2. Verfahren nach Anspruch 1, wobei das Zeigevorrichtungsereignis durch Betätigung einer rechten Taste (604) der Zeigevorrichtung (600) generiert wird.

3. Verfahren nach einem der vorhergehenden Ansprüche, wobei die Funktion kontextempfindlich ist.

4. Verfahren nach einem der vorhergehenden Ansprüche, wobei das Zeigevorrichtungsereignis einen Klick nach oben oder einen Klick nach unten umfasst.

5. Verfahren nach einem der vorhergehenden Ansprüche, das Folgendes umfasst: Bestimmen von zwei Orten auf der berührungsempfindlichen Anzeige (118), wenn das Zeigevorrichtungsereignis einen Klick nach oben und einen Klick nach unten umfasst, Zuordnen des Zeigevorrichtungsereignisses und von Orten zu einer Geste und Ausführung einer der Geste zugeordneten Funktion.

6. Verfahren nach einem der vorhergehenden Ansprüche, wobei es sich bei der Funktion um eine von Folgenden handelt: Anzeigen eines Menüs, Scrollen zu einer anderen Anwendung und Anzeigen eines Homescreens.

7. Verfahren nach Anspruch 1, wobei das Ausführen der der Berührung zugeordneten Funktion das Simulieren von Eingaben auf der berührungsempfindlichen Anzeige umfasst.

8. Verfahren nach einem der vorhergehenden Ansprüche, das das Zuordnen des Zeigevorrichtungsereignisses und Orts zu einer einem definierten Bereich zugeordneten Berührung umfasst, wenn sich der Ort in dem definierten Bereich befindet.

9. Verfahren nach Anspruch 1, wobei sich ein Pufferbereich (212) zwischen dem Anzeigebereich (206) und dem berührungsempfindlichen Nichtanzeigebereich (208) befindet.

10. Computerlesbares Medium, das einen computerlesbaren Code aufweist, der durch zumindest einen Prozessor (102) der tragbaren elektronischen Vorrichtung (100) ausgeführt werden kann, um das Verfahren nach einem der vorhergehenden Ansprüche durchzuführen.

11. Tragbare elektronische Vorrichtung (100), umfassend:
eine berührungsempfindliche Anzeige (118), die konfiguriert ist, um Informationen anzuzeigen;
einen berührungsempfindlichen Nichtanzeigebereich (208), der sich um einen Anzeigebereich (206) der berührungsempfindlichen Anzeige (118) erstreckt; und
einen Prozessor (102), der zu Folgendem mit der berührungsempfindlichen Anzeige verbunden ist:
Empfangen einer Zeigevorrichtungsereigniseingabe, wobei die Zeigevorrichtungsereigniseingabe von einer Zeigevorrichtung empfangen wird, die sich mit der tragbaren elektronischen Vorrichtung in elektrischer Verbindung befindet, und wobei es sich bei der Zeigevorrichtung um eines von Folgenden handelt: eine Maus, einen Joystick und einen Trackball;
Bestimmen eines Orts eines angezeigten Trackers, der durch die Zeigevorrichtung in dem Anzeigebereich der berührungsempfindlichen Anzeige gesteuert wird, welcher der Zeigevorrichtungsereigniseingabe entspricht;
als Reaktion auf das Bestimmen, dass sich der Ort des angezeigten Trackers in einem definierten Bereich des Anzeigebereichs (206) befindet, Zuordnen (304) der Zeigevorrichtungsereigniseingabe und des definierten Bereichs zu einer Meta-Navigationsgesteneingabe durch Zugriff auf einen Speicher der tragbaren elektronischen Vorrichtung, der mit dem Prozessor in Verbindung steht, wobei es sich bei der Meta-Navigationsgeste um eine Berührung handelt, deren Ursprungspunkt außerhalb des Anzeigebereichs des berührungsempfindlichen Overlays (114) liegt, wobei der Speicher Meta-Navigationsgesteneingaben und Nicht-Meta-Navigationsgesteneingaben umfasst, die in Zusammenhang mit Zeigevorrichtungsereigniseingaben und Orten auf dem Anzeigebereich gespeichert sind, wobei der definierte Bereich kleiner ist als der Anzeigebereich der berührungsempfindlichen Anzeige; und
Ausführen einer Funktion, die der Meta-Navigationsgesteneingabe (216) zugeordnet ist;
wobei sich der angezeigte Tracker von einem Standardtrackersymbol in ein anderes Trackersymbol ändert, wenn sich der Ort des angezeigten Trackers in dem definierten Bereich befindet.

## Revendications

1. Procédé pour faciliter la saisie sur un dispositif électronique portable (100) possédant un afficheur tactile (118), le procédé comprenant :
la réception d'une entrée d'événement de dispositif de pointage au niveau d'un processeur (102) du dispositif électronique portable (100), le dispositif électronique portable comprenant une zone de non-affichage tactile (208) s'étendant autour d'une zone d'affichage (206)de l'afficheur tactile (118), l'entrée d'événement de dispositif de pointage étant reçue en provenance d'un dispositif de pointage en communication électrique avec le dispositif électronique portable et le dispositif de pointage étant : une souris, une manette et une boule de commande ;
la détermination de l'emplacement d'un traqueur affiché commandé par le dispositif de pointage dans la zone d'affichage de l'afficheur tactile correspondant à l'entrée d'événement de dispositif de pointage ;
en réponse à la détermination effective de l'emplacement du traqueur à l'intérieur d'une zone déterminée de la zone d'affichage (206), le mappage (304), au niveau du processeur en accédant à une mémoire du dispositif électronique portable en communication avec le processeur, l'entrée d'événement de dispositif de pointage et la zone définie d'une entrée gestuelle de méta-navigation, un geste de méta-navigation étant un contact ayant un point d'origine en dehors de la zone d'affichage du dispositif de désignation tactile (114),
la mémoire comprenant des entrées gestuelles de méta-navigation et des entrées gestuelles de non-méta-navigation stockées en association avec des entrées d'événements de dispositif de pointage et des emplacements sur la zone d'affichage, la zone définie étant plus petite que la zone d'affichage de l'afficheur tactile ;
et
l'exécution d'une fonction associée avec l'entrée gestuelle de méta-navigation (216) ;
dans lequel le traqueur affiché passe d'une icône de traqueur par défaut à une icône de traqueur différent quand l'emplacement du traqueur affiché se trouve à l'intérieur de la zone définie.

2. Procédé selon la revendication 1, dans lequel l'événement de dispositif de pointage est généré par l'activation d'un bouton droit (604) d'un dispositif de pointage (600).

3. Procédé selon une quelconque revendication précédente, dans lequel la fonction est sensible au contexte.

4. Procédé selon une quelconque revendication précédente, dans lequel l'événement de dispositif de pointage comprend le clic vers le haut ou le clic vers le bas.

5. Procédé selon une quelconque revendication précédente, comprenant la détermination de deux emplacements sur l'afficheur tactile (118) lorsque l'événement de dispositif de pointage comprend le clic vers le haut et le clic vers le bas, le mappage de l'événement de dispositif de pointage et les emplacements afférents à un geste et l'exécution d'une fonction associée au geste.

6. Procédé selon une quelconque revendication précédente, dans lequel la fonction est l'une des fonctions suivantes :
l'affichage d'un menu, le défilement vers une application différente et l'affichage d'un écran d'accueil.

7. Procédé selon la revendication 1, dans lequel l'exécution de la fonction associée au contact comprend la simulation des entrées sur l'afficheur tactile.

8. Procédé selon une quelconque revendication précédente, comprenant le mappage de l'événement de dispositif de pointage et l'emplacement d'un contact associé à une zone définie quand l'emplacement se trouve dans la zone définie.

9. Procédé selon la revendication 1, dans lequel une zone tampon (212) est située entre la zone d'affichage (206) et la zone de non-affichage tactile (208).

10. Support lisible par ordinateur comportant un code lisible par ordinateur pouvant être exécuté par au moins un processeur (102) du dispositif électronique portable (100) pour l'exécution du procédé d'une quelconque revendication précédente.

11. Dispositif électronique portable (100) comprenant :
un afficheur tactile (118) configuré pour afficher des informations ;
une zone de non-affichage tactile (208) s'étendant autour d'une zone d'affichage (206) de l'afficheur tactile (118), et
un processeur (102) connecté à l'afficheur tactile pour :
la réception d'une entrée d'événement de dispositif de pointage, l'entrée d'événement de dispositif de pointage étant reçue en provenance d'un dispositif de pointage en communication électrique avec le dispositif électronique portable et le dispositif de pointage étant : une souris, une manette et une boule de commande ;
la détermination d'un emplacement d'un traqueur affiché commandé par le dispositif de pointage dans la zone d'affichage de l'afficheur tactile correspondant à l'entrée d'événement de dispositif de pointage ;
en réponse à la détermination de l'emplacement effectif du traqueur affiché à l'intérieur d'une zone déterminée de la zone d'affichage (206), le mappage (304), en accédant à une mémoire du dispositif électronique portable en communication avec le processeur, l'entrée d'événement de dispositif de pointage et la zone définie d'une entrée gestuelle de méta-navigation, le geste de méta-navigation étant un contact ayant un point d'origine en dehors de la zone d'affichage du dispositif de désignation tactile (114), la mémoire comprenant des entrées gestuelles de méta-navigation et des entrées gestuelles de non-méta-navigation stockées en association avec des entrées d'événements de dispositif de pointage et des emplacements sur la zone d'affichage, la zone définie étant plus petite que la zone d'affichage de l'afficheur tactile ; et
l'exécution d'une fonction associée à l'entrée gestuelle de méta-navigation (216) ;
dans lequel le traqueur affiché passe d'une icône de traqueur par défaut à une icône de traqueur différent quand l'emplacement du traqueur affiché se trouve à l'intérieur de la zone définie.
